# EUROPEAN PATENT SPECIFICATION

(11) **EP 1 754 616 B1**
(45) Date of publication and mention of the grant of the patent: **07.05.2008**
(21) Application number: 06017067.7
(22) Date of filing: 16.08.2006
(51) Int. Cl.: B60H 1/32

(54) **Vehicular air conditioner**
Kraftfahrzeugklimaanlage
Climatiseur pour véhicule

(30) Priority: 19.08.2005 JP 2005239084
(43) Date of publication of application: 21.02.2007
(73) Proprietor: Calsonic Kansei Corporation, Tokyo 164-8602 (JP)
(72) Inventor: Suzuki, Kenji, Nakano-ku Tokyo 164-8602 (JP)
(74) Representative: Grünecker, Kinkeldey, Stockmair & Schwanhäusser Anwaltssozietät

(56) References cited:
- US-A- 5 737 936
- US-A1- 2004 083 747
- US-A1- 2005 138 945

## Description

### BACKGROUND OF THE INVENTION

### Field of the Invention

The present invention relates to a vehicular air conditioner.

### Description of the Related Art

Japanese Patent Application Laid-Open No. 2004-237870 discloses a conventional vehicular air conditioner. This conventional vehicular air conditioner includes an air conditioning unit having a unit case having the air passage therein. The unit case contains a cooling heat exchanger, a heating heat exchanger, and an air mixing door. Pipes are connected to the cooling heat exchanger for introducing and discharging a coolant into and from the cooling heat exchanger. The pipes are provided outside the unit case and accommodated in a pipe cover attached to the unit case.

The coolant flowing through the pipe cools the pipe and condenses vapor in air around the pipe into water. The condensation water drops off the pipes. The droplet of the condensation water is received on a bottom of the pipe cover not to fall outside the air conditioning unit.

The pipe cover has an opening that communicates with inside of the unit case. The condensation water on the bottom of the pipe cover flows into the unit case via the opening, and then, is discharged, with condensation water generated around the cooling heat exchanger, from a drain opening formed at a bottom of the unit case.

The low-temperature condensation water flowing on the bottom of the cover may cool the pipe cover. The pipe cover has an adiabatic member on its bottom in order not to generate the condensation water on the outer surface of the pipe cover.

US 2005/0138945 A1 shows a vehicular air conditioner according to the preamble of claim 1.

### SUMMARY OF THE INVENTION

According to this conventional art, since the pipe cover needs to be prepared, manufacturing cost tends to be high.

If pipes connected to a cooling heat exchanger are provided simply in a unit case without a particular pipe cover, condensation water on outside the pipes may drop in an air passage. The droplet of the condensation water may be blown out to outlets of the air passage by an air-flow therein. The pipes in the air passage increase the air-flow resistance of the air passage.

The present invention has been developed in view of the above problems and provides a vehicular air conditioner capable of draining condensation water from pipes and a cooling heat exchanger without any particular pipe cover.

An aspect of the preset invention is a vehicular air conditioner, including: a cooling heat exchanger having a seal member attached on a side face thereof; a case having an air passage therein, the case including a case body provided with an opening through which the cooling heat exchanger is removably inserted into the case body, and a cover covering the opening of the case body and having a substantially U-shaped portion formed with a pair of ribs abut on the seal member on the cooling heat exchanger such that the U-shaped portion and the seal member define a tubular passage; an interior pipe disposed in the case and connected to the cooling heat exchanger for introducing and discharging a coolant into and from the cooling heat exchanger; an upper portion of the tubular passage accommodating the interior pipes therein; and a lower end opening of the tubular passage communicating with a drain space between a lower surface of the heat exchanger and a drain recess formed at the bottom of the case body.

It is noted that, in the present invention, the U-shaped portion provided in the cover should not be limited to a U-shape. Since it only requires a substantial U-shaped cross-section, similar shapes, such as a V-shape, may be applied.

### BRIEF DESCRIPTION OF THE ACCOMPANYING DRAWINGS

Fig. 1 is a front view of a vehicular air conditioner according to an embodiment of the present invention;
Fig. 2 is a cross-sectional view of the air conditioner as taken along the line II-II of Fig. 1;
Fig. 3 is a cross-sectional view showing an air conditioning unit of the vehicular air conditioner as taken along the line III-III of Fig. 1;
Fig. 4 is a side view showing the air conditioning unit of the vehicular air conditioner as taken along the line IV-IV of Fig. 1;
Fig. 5 is a side view showing the air conditioning unit from which a cover is removed as taken along the line V-V of Fig. 1;

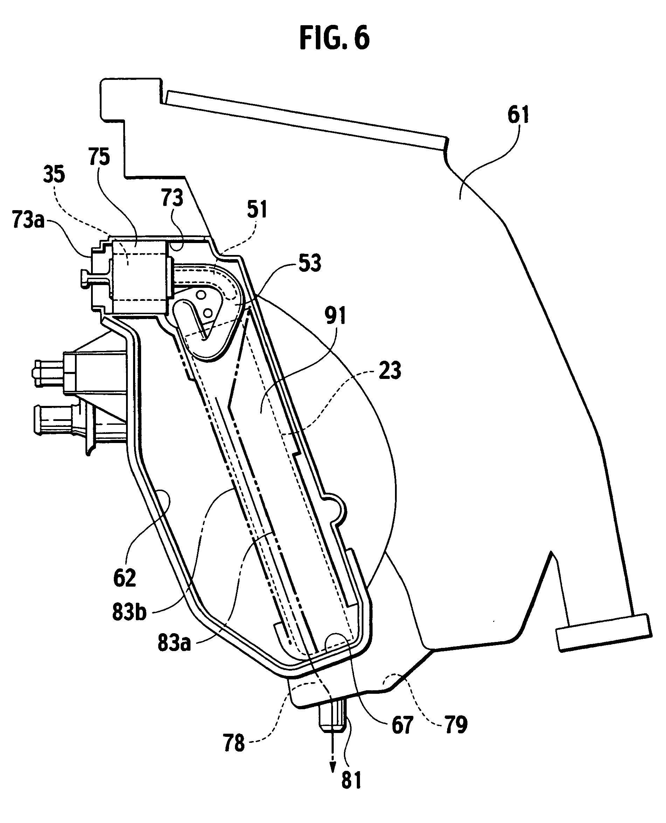

Fig. 6 is a side view showing the air conditioning unit of Fig. 5 with virtual lines showing a pair of ribs of the cover;
Fig. 7 is an enlarged sectional view showing a region of a drain recess of the air conditioning unit;
Fig. 8 is an enlarged sectional view as taken along the line II-II of Fig. 1;
Fig. 9 is an enlarged sectional view as taken along the line IX-IX of Fig. 1;
Fig. 10 is a side view of the cover alone as taken along the line X-X of Fig. 1; and
Fig. 11 is a side view of the cover of Fig. 10 shown with an expansion valve and interior pipes.

### DETAILED DESCRIPTION OF THE PREFERRED EMBODIMENTS

An embodiment of the present invention will be described with reference to the accompanying drawings.

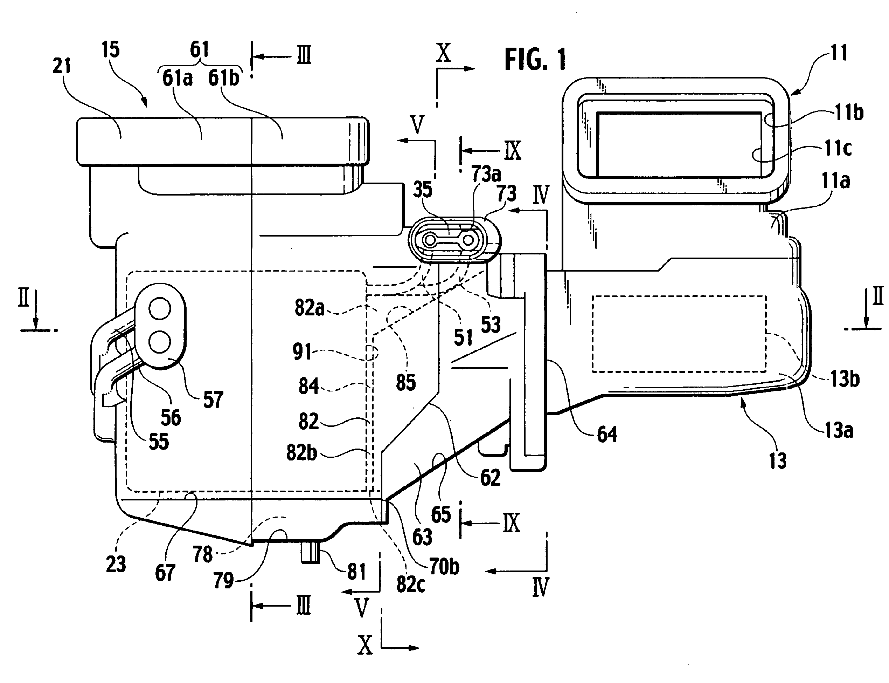

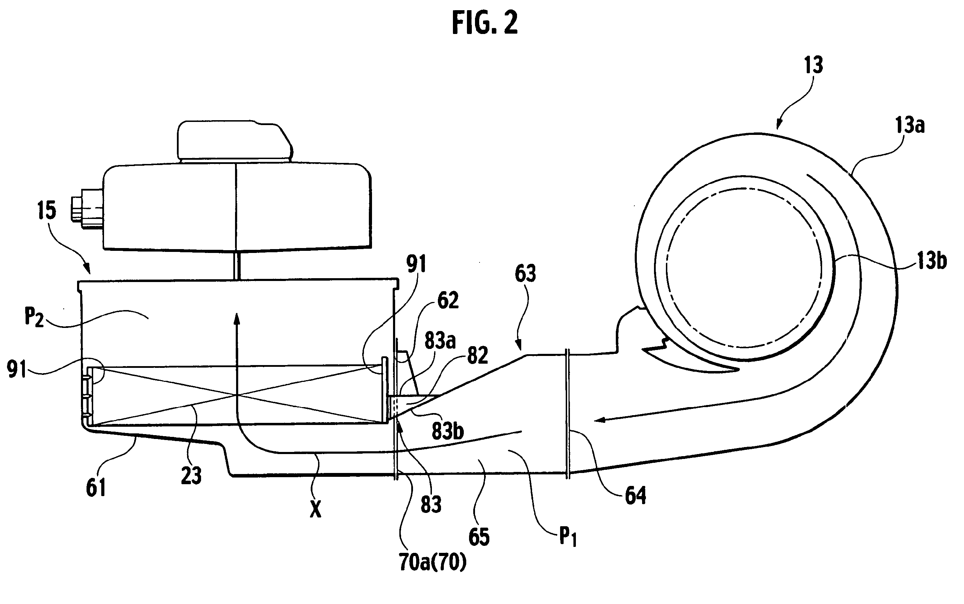

Fig. 1 is a schematic view of a vehicular air conditioner of the present embodiment. Fig. 2 is a cross-sectional view taken along the line II-II of Fig. 1. As shown in Figs. 1 and 2, the vehicular air conditioner of the present embodiment provided in a passenger compartment of the vehicle and includes, starting with the windward side, an air intake unit 11, a fan unit 13 as an air sending means connected to the air intake unit 11 in the downwind side of the intake unit 11, an air conditioning unit 15 configured to adjust temperature of the air from the fan unit 13, and unshown ducts are connected to an outlet of the air conditioning unit 15 and configured to discharge the conditioned air to a passenger compartment of the vehicle.

The air intake unit 11 is configured to select whether to intake air from inside or outside the vehicle. The air intake unit 11 includes an air intake box 11 a formed with an outside air inlet 11b and an inside air inlet 11c, and an intake door (not shown) pivotally provided in the air intake box 11 a for selectively opening and closing the outside air inlet 11b and the inside air inlet 11c.

The fan unit 13 is connected to downstream of the air intake unit 11 and includes a spirally-shaped scroll case 13a and a fan 13b disposed in the scroll case 13a. When the fan 13a is rotated, air is introduced into the fan unit 13 via the air intake unit 11 and discharged to the air conditioning unit 15.

The air conditioning unit 15 is connected to the downstream area of the fan unit 13 and is configured to adjust temperature of the air from the fan unit 13 as passing the air therethrough. The structure of the air conditioning unit 15 will be described later.

Ducts are connected to an outlet of the air conditioning unit 15 and are configured to discharge conditioned air from the air conditioning unit 15 into a desired part of the passenger compartment. As those ducts, there are a vent outlet duct for discharging air toward upper body of a passenger, a defroster outlet duct for discharging air toward windshield of the vehicle, a front foot outlet duct for discharging air toward feet of front passengers, a rear outlet duct discharging air toward rear seat, and the like.

With this structure, when the fan 13a is put into operation, air flows through the air intake unit 11, the fan unit 13, the air conditioning unit 15, and the outlet ducts in order, and then, the air is discharged into the passenger compartment. Here, the air that is adjusted in desired temperature by the air conditioning unit 15 is discharged into the passenger compartment.

The air conditioning unit 15 is provided in the central portion in the vehicle's widthwise direction and the air intake unit 11 and the fan unit 13 are provided in the side portion in the vehicle's widthwise direction (in the front passenger's side as seen from the central portion in the present embodiment). This structure makes the arrangement of the outlet ducts more compact in a well-balanced manner and ensures a sufficient space in the driver's side for other equipments. Further, the structure is also effective to ensure foot spaces in front seats.

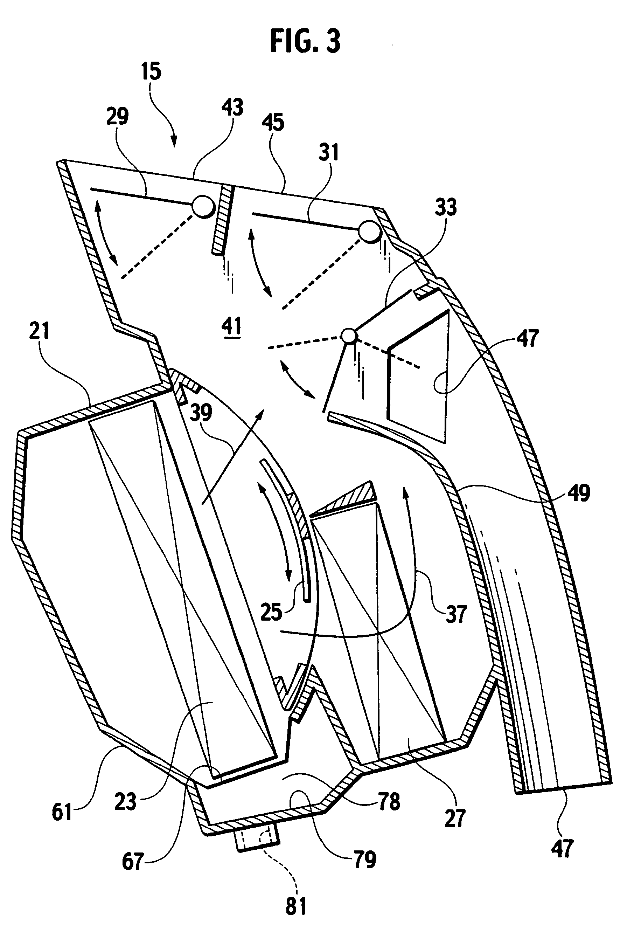

The air conditioning unit 15 will be explained in more detail. As shown in Fig. 3, the air conditioning unit 15 includes a unit case 21 forming air passages therein. The unit case 21 accommodates an evaporator 23 as a cooling heat exchanger, an air mixing door 25 as a temperature adjustor for adjusting air temperature, a heater core 27 as a heating heat exchanger, and outlet switching doors 29, 31, 33.

The evaporator 23 is provided as an element of a refrigeration cycle and cools air passing therethrough by internally circulating a refrigerant in low temperature and low pressure.

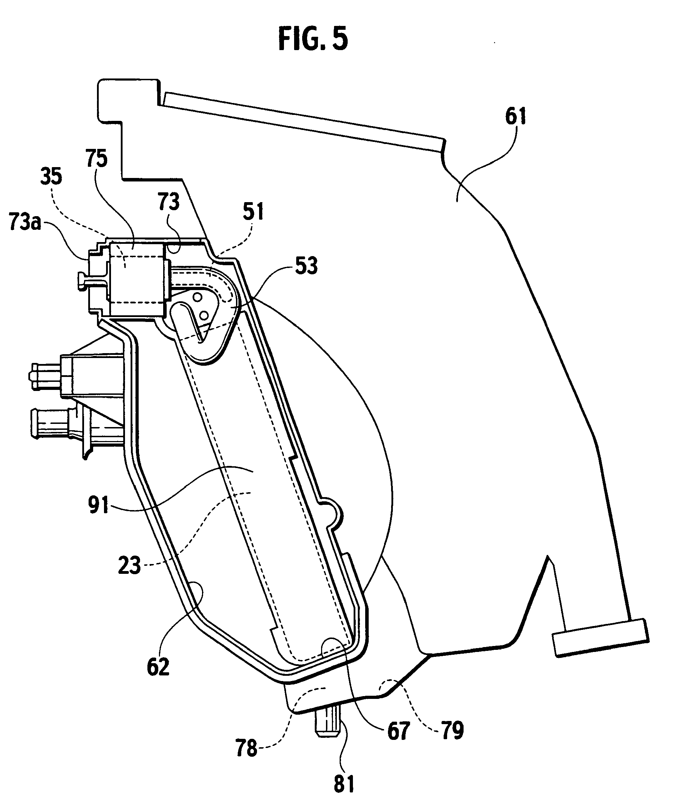

The refrigeration cycle includes a compressor for adiabatically compressing and discharging the refrigerant as a coolant, a condenser for being provided downstream of the compressor and condensing the gas-liquid mixing coolant into liquid by releasing the heat of coolant which is compressed by the compressor and became in a condition of high temperature and high pressure into air, a liquid tank provided as a gas-liquid separator in a downstream area of the condenser, an expansion valve 35 (See Fig. 1) provided downstream the liquid tank for adiabatically expanding the liquid coolant in low temperature and high pressure, and the evaporator 23 provided in downstream of the expansion valve 35 for internally distributing the adiabatically expanded coolant in low temperature and low pressure and drawing heat from the air passing through around the evaporator 23 to cool the air. Separated by a dash panel (partition wall) between an engine compartment (outside of the passenger compartment) and the passenger compartment, the evaporator 23 and the expansion valve 35 (see Figs. 1 and 5) are disposed in the passenger compartment (in the air conditioning unit 5) and other elements (the compressor, the liquid tank, and the condenser) are disposed in the engine compartment.

The heater core 27 is a heat radiator for radiating the heat of an engine as a heat source. More specifically, the heater core 27 circulates coolant whose temperature becomes high as passing through a water jacket of the engine so as to radiate the heat of the high-temperature coolant. Accordingly, when air passes through the heater core 27, the air is heated. The heater core 27 is provided behind and facing to the evaporator 23 in the vehicle's longitudinal direction. The air passing area and the height of the heater core 27 are made smaller than those of the evaporator 23 so that the heater core 27 faces the lower part of the evaporator 23.

The downstream of the evaporator 23 diverges into a hot air passage 37 and a bypass passage 39. The hot air passage 37 is a passage for passing hot air heated in the heater core 27 therethrough. The bypass passage 39 is a passage for passing cool air cooled in the evaporator 23 therethrough so as to bypass the heater core 27.

An inlet of the hot air passage 37 and an inlet of the bypass passage 39 are provided next to each other substantially in the vertical direction, and between the inlets, the air mixing door 25 as a temperature adjusting means is provided. The air mixing door 25 controls the ratio of air amounts distributed to the bypass passage 39 and the hot air passage 37. The air mixing door 25 of the present embodiment is a plate-like sliding door which is circularly curved and convexes toward downstream area.

The bypass passage 39 is formed in a substantial liner shape directed to a vent outlet 45 via an air mixing chamber 41. The hot air passage 37 has a portion in downstream of the heater core 27, which is bent upwardly, toward the bypass passage 39, by a hot air guide wall 49.

The confluence of downstream of the bypass passage 39 and the hot air passage 37 functions as the air mixing chamber 41 for mixing cool air and hot air. The air mixing chamber 41 diverges into a plurality of outlets 43, 45, 47. According to the present embodiment, these outlets are a defroster outlet 43, the vent outlet 45, and a foot outlet 47. These outlets 43, 45, 47 are opened and closed by the outlet switching doors 29,31,33.

With this structure, the air conditioning unit 15 adjusts air temperature by controlling the ratio of air amount (hot air amount) passing through the heater core 27 and the air amount (cool air amount) bypassing the heater core 27 with the movement of the air mixing door 25. Further, an outlet for discharging conditioned air is selected among the outlets 43, 45, and 47 with the movement of the outlet switching doors 29, 31, and 33. Accordingly, conditioned air in desired temperature is discharged to a desired location of the passenger compartment.

The structure of the unit case 21 of the air conditioning unit 15 will be described in more detail.

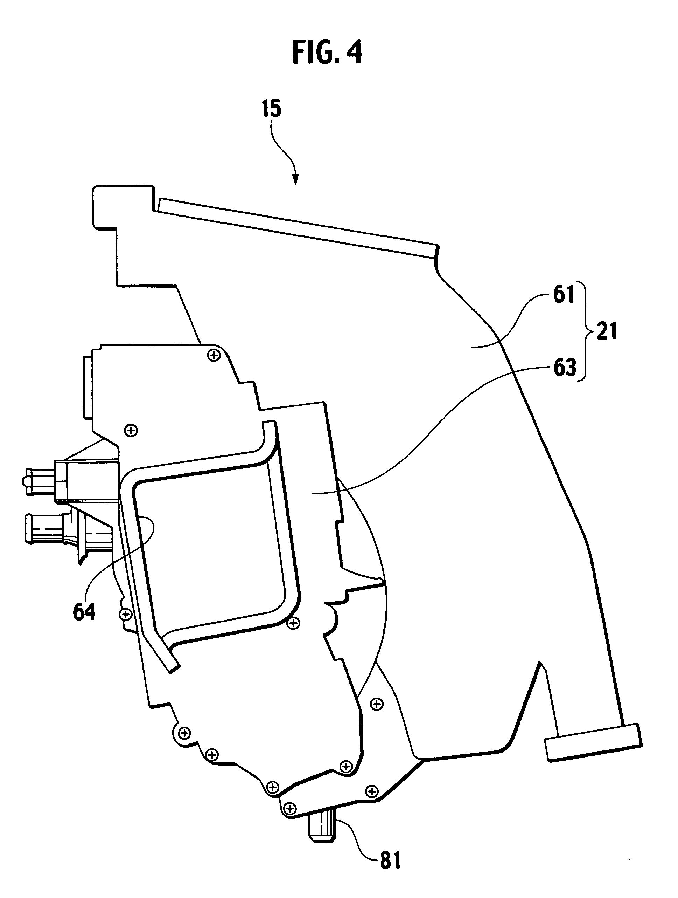

As shown in Fig. 1, the unit case 21 includes a case body 61 and a cover 63. The case body 61 is composed of a combination of case members 61a, 61b and contains the evaporator 23, the air mixing door 25, the heater core 27, and the outlet switching doors 29, 31, 33 therein. On the side wall of the case body 61, as shown in Figs. 2 and 5, an opening 62 is provided. The evaporator is insertable through the opening 62 into the case body 61 and removable through the opening from the case body 21. As shown in Fig. 4, the opening 62 is covered by the cover 63 when it is in use. As shown in Figs. 1 and 2, the cover 63 is formed with a communication inlet communicating with the outlet of the fan unit 13. A part of the air passage in the case 21 is an L-shaped air passage X (indicated by an arrow X in Fig. 2). The L-shaped air passage X is formed by an upstream portion P1 which is upstream of the evaporator 23 and a downstream portion P2 which is downstream of the evaporator 23. The upstream portion P 1 and The downstream portion P2 are perpendicular to each other. The cover 63 forms the upstream portion P1 therein. The upstream portion P1 in the cover 63 is orthogonal to the flow direction of air passing through the evaporator 23 (the direction orthogonal to an air introducing surface of the evaporator 23). A bottom wall 65 of the cover 63 is a downward slope toward a joint line 70b defined by a bottom wall 67 of the case body 61 and the bottom wall 65 of the cover 63. As shown in Fig. 1, interior pipes 51, 53 to be connected to the evaporator 23 and a connector 35 as a terminal of the pipes 51, 53 are provided in the case 21. The interior pipes 51, 53 and the connector 35 are disposed on both sides of a joint line 70 defined by the case body 61 and the cover 63. The connector 35 is the above described expansion valve 35 in the refrigeration cycle. The interior pipes 51, 53 extend from a side face of the evaporator 23 laterally and lay in the side of the cover 63 from the joint 70b defined by the bottom wall 67 of the case body 61 and the bottom wall 65 of the cover 63. That is, the interior pipes 51, 53 disposed upstream side from the joint 70b.

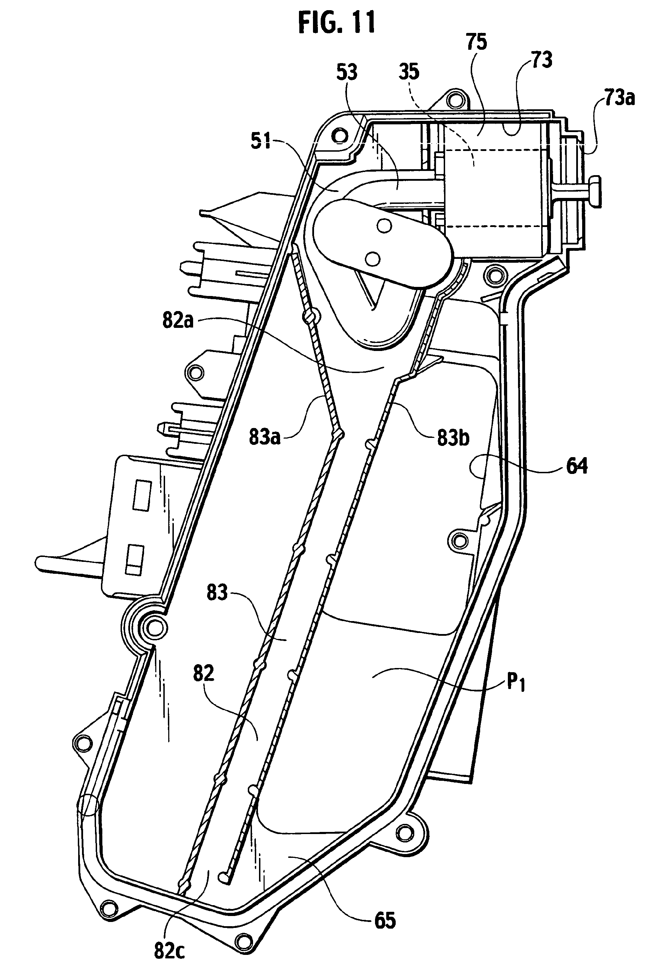

The connector 35 is contained in a connector container 73 which is formed in a cylindrical shape astride the joint 70. The cylindrical connector container 73 has an exposure opening 73a for exposing the connector 35 to the outside of the case 21. In the gap between the connector 35 and the connector container 73, a grommet 75 is provided so that the gap is sealed as exposing the connector 25 (See Figs. 5 and 11).

The exposure opening 73a is positioned in line with a through hole (not shown) formed at the dash panel. Through the exposure opening and the through hole, exterior pipes which are provided outside the case 21 (in the engine compartment) are connected to the connector 25. More particularly, the interior pipe 51 connected to the evaporator inlet is connected to a pipe (one of the exterior pipes) connected to the liquid tank outlet via the connector 35. Accordingly, the coolant from the liquid tank can be introduced into the evaporator via the connector 35. On the other hand, the interior pipe 53 connected to the evaporator outlet is connected to a pipe (one of the exterior pipes) connected to the compressor inlet via the connector 35. Accordingly, the coolant in low temperature and low pressure, which is discharged from the evaporator 23, can be sent back to the compressor. In other words, the expansion valve 35 works as the connector for connecting the exterior pipes to the interior pipes 51, 53.

The reference numbers 55 and 56 represent hot water pipes inside the passenger compartment for connecting the heater core 27 and the water jacket of the engine. The pipes 55, 56 are connected to the hot water pipes from the engine compartment via a connecter 57 provided at the end of the hot water pipes 55, 56.

When air is flown to the air passage of the air conditioning unit 15 in a condition that cold coolant is circulated in the evaporator 23, moisture in the air passing through the evaporator builds up condensation on the surface of the evaporator 23 and condenses into water so as to drop from the evaporator 23. In order to discharge the condensation water, as shown in Figs. 1, 3, and 7, the bottom wall 67 of the case body 61 has, under the evaporator 23, a drain recess 79 which is recessed from other parts of the bottom wall 67 and passes the condensation water draped from the evaporator 23 thereon and a drain opening 81 which is formed as a through hole at a lower part of the slope of the drain recess 79. With this structure, the condensation water from the evaporator 23 can be discharged through the drain opening 81 to the outside of the vehicle. The drain recess 79 is partially covered by the lower surface of the evaporator 23 to form a drain space 78 between the lower surface of the evaporator 23 and the drain recess 79. The drain space 78 hardly has influence from the air passing through the air passage.

Since the cold coolant flows through the interior pipes 51, 53 and the expansion valve 35, moisture builds up condensation on the surfaces of the interior pipes 51, 53 and the expansion valve 35 so that condensation water is generated. A structure for discharging the condensation water around the interior pipes 51, 53 and the expansion valve 35 will be explained.

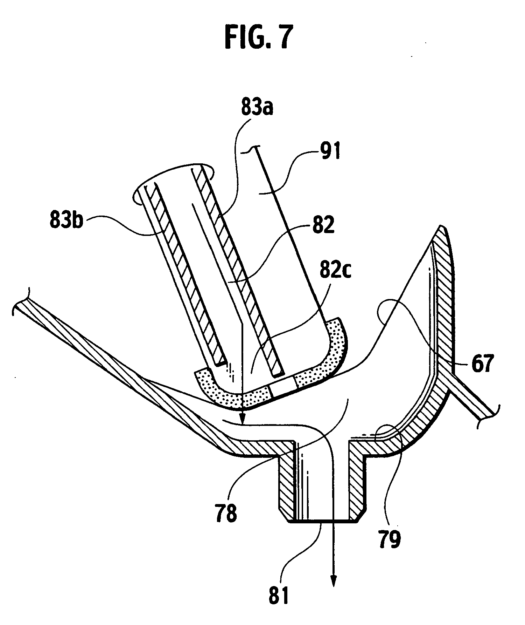

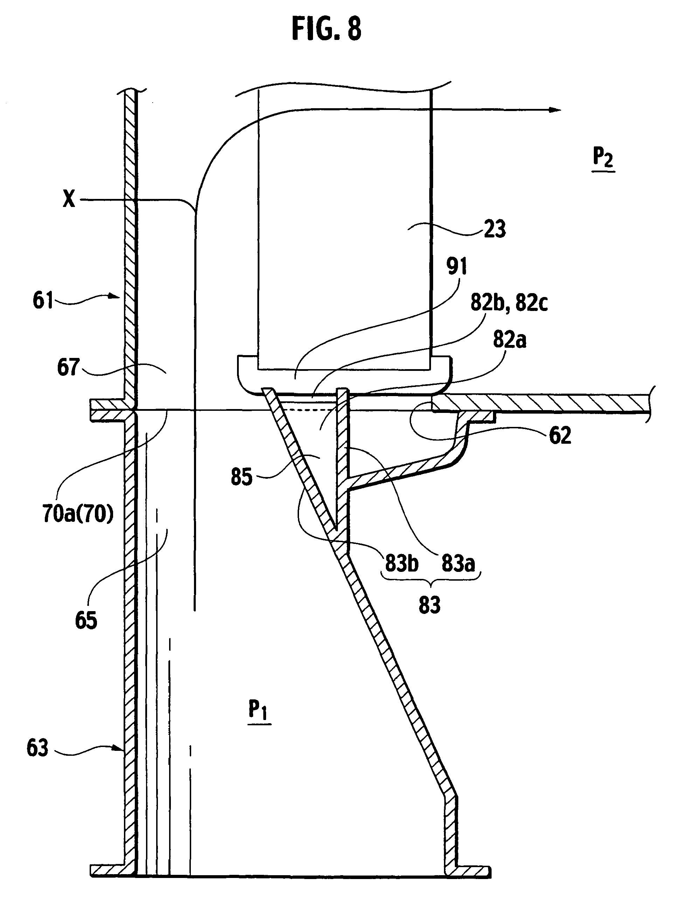

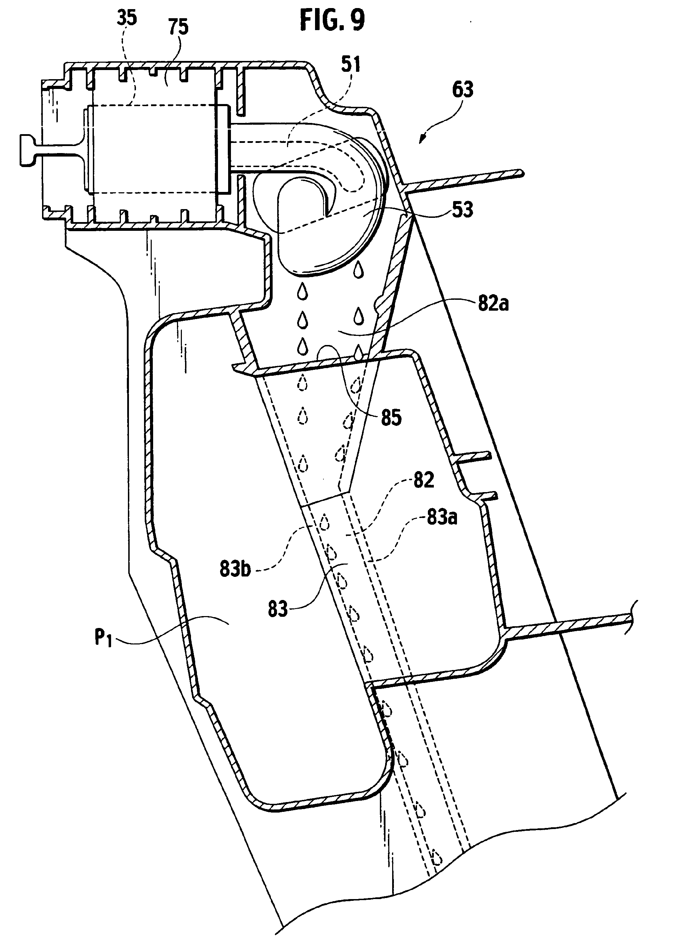

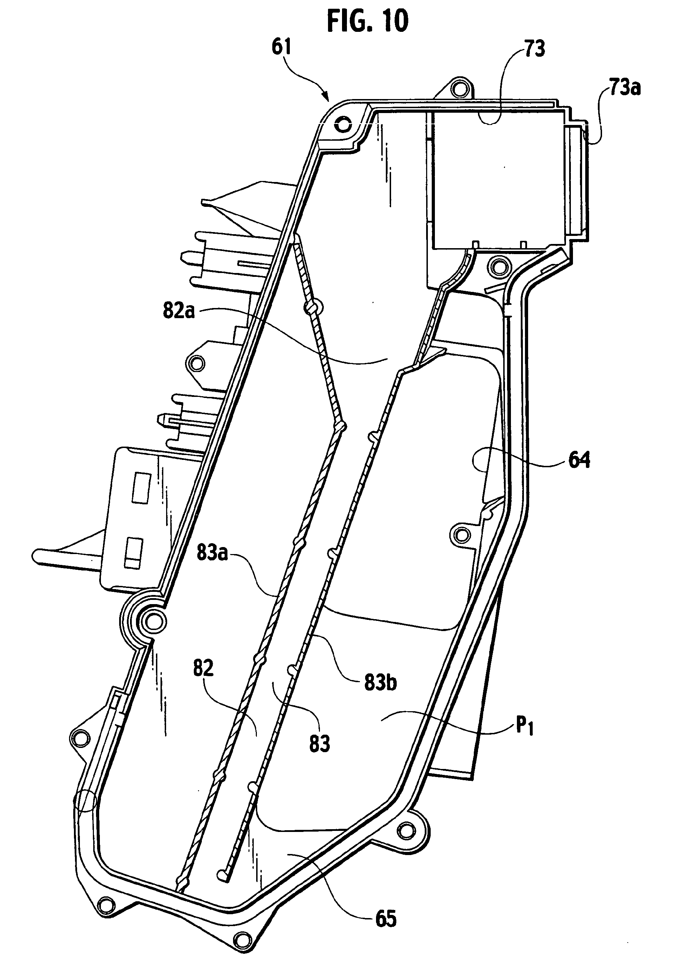

As shown in Figs. 7 to 10, the cover 63 has a substantially U-shaped portion 83. The U-shaped portion 83 is formed with a pair of ribs 83a, 83b substantially vertically extending when viewed in any direction except for a plan view. As shown in Figs. 7 and 8, the pair of ribs 83a, 83b of the U-shaped portion 83 are abut on a seal member 91 attached on the side surface of the evaporator 23. Accordingly, a substantially vertically extending tubular passage 82 is formed by the U-shaped portion 83 and the seal member 91. The tubular passage 82 is located at the inside corner of the L-shaped air passage X as shown in Fig. 8. The tubular passage 82 and the air passage P 1 are separated by the rib 83b. As shown in Figs. 1 and 9, the tubular passage 82 is formed in a substantial funnel shape as a whole. The upper portion 82a is widen as it extend to the upper end of the tubular passage 82 and the upper portion 82a serves as a pipe chamber 82a for accommodating the interior pipes 51, 52. A bottom wall 85 of the pipe chamber 82a slopes downwardly toward the side surface of the evaporator 23 and communicates with a tubular passage body 82b. The top of the pipe chamber 82a communicates with the connector container 73.

As shown in Figs. 1, 7 and 8, a lower end opening 82c of the tubular passage body 82b communicates with the drain space 78.

With the above described structure, condensation water generated around the connector 35 and the interior pipes 51, 53 drops to the bottom wall 85 of the pipe chamber 82a that is the upper portion of the funnel-shaped tubular passage 82, as shown in Fig. 1, and the water flows along the bottom wall 85 of the pipe chamber 82a and the tubular passage body 82b and discharged from the lower end opening 82c of the tubular passage body 82b to the drain space 78. In other words, the water may flow down on the seal member 91 of the evaporator 23 or the U-shaped portion 83. The condensation water from the interior pipes 51, 53 and connector 35, which is discharged into the drain space 78, is treated with the condensation water from the evaporator 23 in order to discharge outside the case 21 via the drain opening 81. The water is eventually discharged out of the vehicle.

The effects of the present embodiment will be explained.
(1) According to a vehicular air conditioner of the present embodiment, the unit case has the case body 61 and the cover 63. The interior pipes 51, 53 are provided inside the unit case 21. The cover 63 is provided with the substantially U-shaped portion 83 having a pair of ribs 83a, 83b. The pair of ribs 83a, 83b of the U-shaped portion 83 are abut on a seal member 91 attached on the side face of the cooling heat exchanger 23 such that the U-shaped portion 83 and the seal member 91 define the tubular passage 82. The upper portion 82a of the tubular passage 82 accommodates the interior pipes 51, 53 to receive the droplet of the condense water from the pipes 51, 53. The lower end opening 82c of the tubular passage 82 communicates with a drain space 78 between the bottom surface of the cooling heat exchanger 23 and the drain recess 79 formed at the bottom of the case body 61.
   With this structure, condensation water dropping from the interior pipes 51, 53 which are connected to the cooling heat exchanger 23 is discharged outside the case 21 via the drain space 78 under the cooling heat exchanger 23 without letting the water drop anywhere outside the case 21 and inside the air passage. Since the cover 63 is used for covering an opening 62 for inserting or removing the cooling heat exchanger 23 to or from the case body 61, any particular pipe cover is not required as seen in conventional art (for example, see Japanese Patent Application Laid-Open No. 2004-237870). This allows for a reduction in manufacturing cost.
(2) According to the present embodiment, an L-shaped air passage X is formed with an air passage P1 in upstream area of the cooling heat exchanger 23 and an air passage P2 in downstream area of the cooling heat exchanger 23 that are perpendicular to each other. As clearly seen in Figs. 5 and 8, the interior pipes 51, 53 are provided at an inside corner of the L-shaped air passage X. Therefore, the interior pipes 51, 53 hardly cause an increase in the air-flow resistance in the air passage so that the increase in the air-flow resistance caused by the disposal of the interior pipes 51, 53 can be minimized. The air-flow resistance in the passage may be more reduced than a conventional art in which interior pipes are located in the air passage as seen in Japanese Patent Application Laid-Open No. 2002-59735.
(3) According to the present embodiment, since the interior pipes 51, 53 are located at the inside corner of the L-shaped air passage X so as to use an empty space in the inside corner, the case 21 may not be enlarged outwardly.
(4) According to the present embodiment, since the air passage X and the tubular passage 82 are separated only by one of the ribs 83b, the air conditioner can be made compact.
(5) According to the present embodiment, as shown in Fig. 8, the lower end opening 82c of the tubular passage 82 is provided in the side of the case body 61 as seen from the joint 70b defined by the bottom wall 67 of the case body 61 and the bottom wall 65 of the cover 63. Therefore, condensation water generated around the interior pipes 51, 53 and the connector is discharged without flowing on the joint 70b so that a complex sealing mechanism at the joint 70b is not required. This allows for a reduction in manufacturing cost of the vehicular air conditioner.
(6) As described in the present embodiment, since the interior pipe 51, 53 and connector 35 are disposed astride the joint 70b, if the present embodiment had no above items (1) and (5), condensation water would have flown across the joint 70b. Therefore, the structure of the above items (1) and (5) are more effective.
(7) As described in the present embodiment, since the connector 35 and the interior pipes 51, 53 are provided upstream the joint 70b, if the present embodiment had no above items (1) and (5), condensation water would have flown across the joint 70b. Therefore, the structure of the above items (1) and (5) are more effective.
(8) As described in the present embodiment, since the bottom wall 65 of the cover 63 slope downwardly toward the joint 70b, if the present embodiment had no above items (1) and (5), condensation water would have flown across the joint 70b. Therefore, the structure of the above items (1) and (5) are more effective.
(9) According to the present embodiment, the cooling heat exchanger 23 is the evaporator 23 and the connector 35 works as an expansion valve connected to the inlet of the evaporator 23. Therefore, the number of parts is reduced and this allows for a further reduction in manufacturing cost.

Although the present invention has been described above by reference to certain embodiment, the present invention is not limited to the embodiment. Modifications and variations of the embodiments can be made without departing from the scope of the appended claims. The embodiment is only for illustrative purposes and not intended to limit the present invention.

## Claims

1. A vehicular air conditioner, comprising:
a cooling heat exchanger (23) having a seal member attached on a side face thereof;
a case (21) having an air passage therein, the case (21) including:
a case body (61) provided with an opening (62) through which the cooling heat exchanger (23) is removably inserted into the case body (61);
a cover (63) covering the opening (62) of the case body (61) and having a substantially U-shaped portion (83) ; and
an interior pipe (51, 53) disposed in the case and connected to the cooling heat exchanger (23) for introducing and discharging a coolant into and from the cooling heat exchanger (23);
an upper portion (82a) of the tubular passage (82) accommodating the interior pipes (51, 53) therein; and
a lower end opening (82c) of the tubular passage (82) communicating with a drain space (78) between a lower surface of the heat exchanger (23) and a drain recess (79) formed at the bottom of the case body (61), **characterized in that** said cover (63) is formed with a pair of ribs (83a, 83b), the pair of ribs (83a, 83b) of the U-shaped portion (83) abut on the seal member (91) on the cooling heat exchanger (23) such that the U-shaped portion (83) and the seal member (91) define a tubular passage (82).

2. The vehicular air conditioner according to Claim 1, wherein the interior pipe (51, 53) is disposed on both sides of a joint (70b) defined by a bottom wall (67) of the case body (61) and a bottom wall (65) the cover (63).

3. The vehicular air conditioner according to Claim 1, wherein the cover (63) forms a part (P1) of the air passage therein.

4. The vehicular air conditioner according to Claim 3, wherein one of the pair of ribs (83b) separates the tubular passage (82) and the air passage (X).

5. The vehicular air conditioner according to Claim 1, wherein an L-shaped air passage (X) is formed by an upstream portion (P1) of the air passage which is upstream of the cooling heat exchanger (23) and a downstream portion (P2) of the air passage which is downstream of the cooling heat exchanger (23) that are perpendicular to each other; and
wherein the interior pipes (51, 53) are disposed at an inside corner of the L-shaped air passage (X).

6. The vehicular air conditioner according to Claim 1, wherein the lower end opening (82c) of the tubular passage (82) is provided in the side of the case body (61) as seen from the joint (70b).

7. The vehicular air conditioner according to Claim 1, further comprising a connector (35) at an end of the interior pipe (51, 53) disposed in the case and configured to connect with an exterior pipe which is disposed outside the case (21);

8. The vehicular air conditioner according to Claim 7, wherein the case (21) is provided with a connector container (73), the connector container (73) accommodates the connecter (35) and communicates with the upper portion (82a) of the tubular passage (82).

## Patentansprüche

1. Fahrzeug- Klimatisierungsvorrichtung , aufweisend:
einen Kühl- Wärmetauscher (23) mit einem Dichtungsteil, das an einer Seitefläche desselben verbunden ist;
ein Gehäuse (21) mit einem Luftkanal darinnen, wobei das Gehäuse (21) enthält:
einen Gehäusekörper (61), versehen mit einer Öffnung (62), durch die der Kühl- Wärmetauscher (23) in den Gehäusekörper (61) entfernbar eingesetzt ist;
eine Abdeckung (63), die die Öffnung (62) des Gehäusekörpers (61) abdeckt und einen im wesentlichen U- förmigen Abschnitt (83) aufweist und ein Innenrohr (51, 53), angeordnet in dem Gehäuse und mit dem Kühl- Wärmetauscher (23) verbunden zum Einleiten oder Abgeben eines Kühlmittels in den Kühl- Wärmetauscher (23) hinein, oder aus diesem heraus;
einen oberen Abschnitt (82a) des rohrförmigen Kanales (82), in dem die Innenrohre (51, 53) aufgenommen sind; und
eine untere Endöffnung (82c) des rohrförmigen Kanales (82), der mit einem Ablaufraum (78) zwischen einer unteren Oberfläche des Wärmetauschers (23) und einer Abkaufaussparung (79), gebildet an dem Boden des Gehäusekörpers (61), verbunden ist, **dadurch gekennzeichnet, dass** die Abdeckung (63) mit einem Paar Rippen (83a, 83b) gebildet ist, wobei das Paar Rippen (83a, 83b) des U- förmigen Abschnittes (83) an dem Dichtungsteil (91) an dem Kühl- Wärmetauscher (23) derart anliegt, dass der U- förmige Abschnitt (83) und das Dichtungsteil (91) einen rohrförmigen Kanal (82) bilden.

2. Fahrzeug- Klimatisierungsvorrichtung nach Anspruch 1, wobei das Innenrohr (51, 53) auf beiden Seiten einer Verbindung (70b) angeordnet ist, gebildet durch eine Bodenwand (67) des Gehäusekörpers (61) und eine Bodenwand (65) der Abdeckung (63).

3. Fahrzeug- Klimatisierungsvorrichtung nach Anspruch 1, wobei in der Abdeckung (63) ein Teil (P1) des Luftkanales gebildet ist.

4. Fahrzeug- Klimatisierungsvorrichtung nach Anspruch 3, wobei eine Rippe des Paares von Rippen (83b) den rohrförmigen Kanal (82) und den Luftkanal (X) trennt.

5. Fahrzeug- Klimatisierungsvorrichtung nach Anspruch 1, wobei ein L- förmiger Luftkanal (X) durch einen stromaufwärtigen Abschnitt (P1) des Luftkanales gebildet ist, der stromauf des Kühl- Wärmetauschers (23) ist, und ein stromabwärtiger Abschnitt (P2) des Luftkanales, der stromab des Kühl- Wärmetauschers (23) ist, die rechtwinklig zueinander sind; und
wobei die Innenrohre (51, 53) an einer inneren Ecke des L- förmigen Luftkanales (X) angeordnet sind.

6. Fahrzeug- Klimatisierungsvorrichtung nach Anspruch 1, wobei die untere Endöffnung (82c) des rohrförmigen Kanales (82) in der Seite des Gehäusekörpers (61) vorgesehen ist, wenn von der Verbindung (70b) gesehen.

7. Fahrzeug- Klimatisierungsvorrichtung nach Anspruch 1, außerdem aufweisend eine Verbindungseinrichtung (35) an einem Ende des Innenrohres (51, 53), angeordnet in dem Gehäuse und konfiguriert, um mit einem äußeren Rohr, das außerhalb des Gehäuses (21) angeordnet ist, verbunden zu sein;

8. Fahrzeug- Klimatisierungsvorrichtung nach Anspruch 7, wobei das Gehäuse (21) mit einem Verbindungsbehälter (73) versehen ist, wobei der Verbindungsbehälter (73) die Verbindungseinrichtung (35) unterbringt und mit dem oberen Abschnitt (82a) des rohrförmigen Kanales (82) verbunden ist.

## Revendications

1. Climatiseur pour véhicule, comprenant :
un échangeur thermique de refroidissement (23) ayant un élément d'étanchéité fixé sur sa face latérale ;
un boîtier (21) ayant un passage d'air à l'intérieur de celui-ci, le boîtier (21) comprenant :
un corps de boîtier (61) doté d'une ouverture (62) à travers laquelle l'échangeur thermique de refroidissement (23) est inséré de manière amovible dans le corps de boîtier (61) ;
un couvercle (63) recouvrant l'ouverture (62) du corps de boîtier (61) et ayant une partie sensiblement en forme de U (83) ; et
un tuyau intérieur (51, 53) disposé dans le boîtier est raccordé à l'échangeur thermique de refroidissement (23) pour introduire et décharger un réfrigérant dans et de l'échangeur thermique de refroidissement (23) ;
une partie supérieure (82a) du passage tubulaire (82) logeant les tuyaux intérieurs (51, 53) à l'intérieur de celle-ci ; et
une ouverture d'extrémité inférieure (82c) du passage tubulaire (82) communiquant avec un espace d'évacuation (78) entre une surface inférieure de l'échangeur thermique (23) et un évidement d'évacuation (79) formé au fond du corps de boîtier (61), **caractérisé en ce que** ledit couvercle (63) est formé avec une paire de nervures (83a, 83b), la paire de rainures (83a, 83b) de la partie en forme de U (83) vient en butée sur l'élément d'étanchéité (91) sur l'échangeur thermique de refroidissement (23) de sorte que la partie en forme de U (83) et l'élément d'étanchéité (91) définissent un passage tubulaire (82).

2. Climatiseur pour véhicule selon la revendication 1, dans lequel le tuyau intérieur (51, 53) est disposé des deux côtés d'un joint (70b) défini par une paroi inférieure (67) du corps de boîtier (61) et une paroi inférieure (65) du couvercle (63).

3. Climatiseur pour véhicule selon la revendication 1, dans lequel le couvercle (63) forme une partie (P1) du passage d'air à l'intérieur de celui-ci.

4. Climatiseur pour véhicule selon la revendication 3, dans lequel l'une parmi la paire de nervures (83b) sépare le passage tubulaire (82) et le passage d'air (X).

5. Climatiseur pour véhicule selon la revendication 1, dans lequel un passage d'air en forme de L (X) est formé par une partie amont (P1) du passage d'air qui est en amont de l'échangeur thermique de refroidissement (23) et une partie aval (P2) du passage d'air qui est en aval de l'échangeur thermique de refroidissement (23) qui sont perpendiculaires entre elles ; et
dans lequel les tuyaux intérieurs (51, 53) sont disposés au niveau d'un coin intérieur du passage d'air en forme de L (X).

6. Climatiseur pour véhicule selon la revendication 1, dans lequel l'ouverture d'extrémité inférieure (82c) du passage tubulaire (82) est prévue dans le côté du corps de boîtier (61), comme observé à partir du joint (70b).

7. Climatiseur pour véhicule selon la revendication 1, comprenant en outre un connecteur (35) au niveau d'une extrémité du tuyau intérieur (51, 53) disposé dans le boîtier et configuré pour se raccorder avec un tuyau extérieur qui est disposé à l'extérieur du boîtier (21).

8. Climatiseur pour véhicule selon la revendication 7, dans lequel le boîtier (21) est doté d'un récipient de connecteur (73), le récipient de connecteur (73) loge le connecteur (35) et communique avec la partie supérieure (82a) du passage tubulaire (82).
